Europäisches Patentamt

European Patent Office

Office européen des brevets

(19)

(11) Publication number: **0 079 663
B1**

(12) **EUROPEAN PATENT SPECIFICATION**

(45) Date of publication of patent specification: **05.02.86**

(51) Int. Cl.⁴: **A 01 K 31/16**

(21) Application number: **82201449.4**

(22) Date of filing: **16.11.82**

(54) **Device for collecting eggs.**

(30) Priority: **18.11.81 NL 8105224**

(43) Date of publication of application:
**25.05.83 Bulletin 83/21**

(45) Publication of the grant of the patent:
**05.02.86 Bulletin 86/06**

(84) Designated Contracting States:
**AT BE CH DE FR GB IT LI LU NL SE**

(56) References cited:
**AU-A- 61 823
DE-B-1 923 432**

(73) Proprietor: **Van der Wijst, Antonius Cornelius
Maria
Dorpsstraat 84
NL-5471 NA Loosbroek (NL)**

(72) Inventor: **Van der Wijst, Antonius Cornelius
Maria
Dorpsstraat 84
NL-5471 NA Loosbroek (NL)**

(74) Representative: **Noz, Franciscus Xaverius, Ir.
et al
Boschdijk 155 P.O. Box 645
NL-5600 AP Eindhoven (NL)**

Courier Press, Leamington Spa, England.

## Description

The invention relates to a device for collecting eggs comprising an elongate shoot filled with chaff or similar material in which eggs fall and along the bottom of which is driven an endless conveyor member towards an area where the eggs are to be conducted away, said shoot having in this area a depressed part still followed by the endless conveyor member with a grid-shaped member arranged above the part of the conveyor member lying on the section of the depressed part, which moves obliquely downwards viewed in the direction of the displacement of the conveyor member.

In known devices of the kind set forth the shoot is filled with an appropriate material such as oats chaff, buckwheat chaff or the like and the laying nests are disposed above a given part of the shoot so that the hens will lay the eggs on the oats chaff, buckwheat chaff or the like in the shoot. At fixed instants the endless conveyor member will be actuated so that the oats chaff, buckwheat chaff or the like together with the eggs are displaced by the conveyor member, the eggs being thus passed along a given station, where they can be picked up.

In the device known from German Patent Specification 1,923,432 the grid-shaped member is upwardly inclined from its lower end located in the shoot. Therefore, the eggs arriving on the grid have to be urged upwards along the grid. If this operation is, at all, successful, the risk of breakage of the eggs due to the forces involved is particularly high. No means are mentioned for a further delivery of the eggs removed from the shoot without the risk of breakage.

The invention has for its object to provide a device of the kind set forth in which picking up and delivering the eggs can be automatically and safely performed.

According to the invention this can be achieved in that the upper face of the grid-shaped member is downwardly inclined in the same direction as the subjacent part of the conveyor member but at a smaller angle to the horizontal, whilst the downstream end of this upper face of grid-shaped member is disposed opposite the ascending part of a conveyor belt having catches for eggs and being provided with passages through which the chaff can pass.

When the construction embodying the invention is employed, the oats chaff, buckwheat chaff or the like together with the eggs are moved along the grid-shaped member in the direction towards the conveyor belt provided with catches for eggs, the oats chaff, buckwheat chaff or the like falling through the passages in the conveyor belt and behind the conveyor belt again on the endless conveyor member, whilst the eggs are moved along by the catches. Without exerting undesirable forces one on the other the eggs embedded in the material filling the shoot, for example, the oats chaff, buckwheat chaff or the like are passed to the conveyor belt, which lifts the eggs supplied with the catches out of said material. With the aid of the conveyor belt the eggs can be passed on to further conveyor belts or the like, by which finally the eggs can be placed on racks or the like. Therefore, the construction embodying the invention permits of collecting and disposing the eggs or racks in an at least substantially fully automatic process.

It should be noted that a device is known from Australian Patent Specification 61,823/73 which comprises a horizontal conveyor, the conveying surface of which is formed by a plurality of relatively spaced belt portions extending in the direction of length of the conveyor. The conveyor supplies the eggs to a downwardly inclined sliding path the lower end of which is located near an upwardly extending conveyor belt formed by an endless belt provided with catches. Due to the nature of the structure this known construction is not suitable for the use of the material receiving and supporting the eggs such as the oats chaff, buckwheat chaff or the like.

During the operation of this device it will not be possible to avoid breakage of the eggs due to collisions at the lower end of the sliding path and due to the conveyor belt picking up the eggs, whilst the eggs carried along by the conveyor belt are pushed across and along the eggs staying behind.

The invention will be described more fully hereinafter with reference to an embodiment of the construction in accordance with the invention schematically shown in the accompanying Figures.

Fig. 1 is a schematic sectional view of part of a device embodying the invention.

Fig. 2 is a plan view of part of a grid-shaped member used in the device shown in Fig. 1.

Fig. 3 schematically shows part of a run of a conveyor belt.

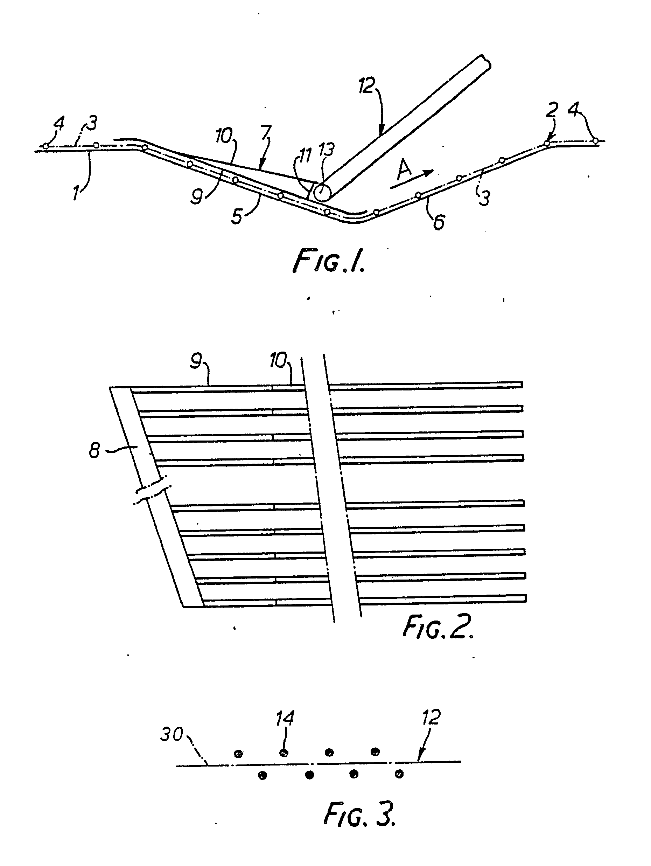

The device schematically shown in Fig. 1 comprises an endless shoot having a bottom 1 and upwardly extending sidewalls (not shown). This shoot is arranged in a hen house and laying nets are arranged at appropriate places above the shoot. In the shoot is arranged an endless conveyor member 2 consisting of chains 3 supporting bars 4 extending transversely of the direction of length of the shoot. With the aid of driving means (not shown) the endless conveyor member can be displaced in the direction of the arrow A.

At the area where the eggs have to be conducted away, the shoot has a depressed part bounded on the underside by two sloping bottom plates 5 and 6 and on the sides by sidewalls (not shown). A grid-shaped member 7 is arranged above the part of the endless conveyor member 2 lying on the bottom part 5 and moving obliquely downwards along said bottom part 5, when the endless conveyor member 2 is driven in the direction of the arrow A.

Fig. 2 shows on an enlarged scale that this grid-shaped member comprises a strip 8 extending transversely of the direction of length of the shoot 1 at the upstream end viewed in the direction of displacement indicated by the arrow A. The strip 8 is disposed so that it is at an angle differing from 90° to the longitudinal axis of the shoot 1. To the strip 8 are fastened the ends of a plurality of bars 9, which extend parallel to one another in the direction of length of the shoot as well as parallel to the part of the endless conveyor member 2 extending along the bottom part 5 of the shoot and the adjoining parts of said member so that the bars 9 constitute, in addition, a kind of guide member ensuring that the endless conveyor member 2 correctly follows the depressed part of the shoot.

At a given distance from the ends of the bars 9 fastened to the strip 8 the bars 9 have secured to them the ends of further bars 10, which are at a smaller angle to the horizontal than the bars 9 so that the ends of the bars 10 remote from the strip 8 are located at a higher level than the subjacent bars 9, whilst they are connected near said ends with the bars 9 with the aid of the bars 11. From Fig. 1 it will furthermore be apparent that the downstream ends of the bars 10, viewed in the direction of displacement indicated by the arrow A, are located opposite an upper run of an endless conveyor belt 12, which is upwardly inclined from the end passed around a reversing member 13 near the bars 11.

Fig. 3 shows part of a run of the conveyor belt 12 employed in the embodiment described herein. From this Figure it will be apparent that the conveyor belt comprises two endless chains 30 or similar members located on the sides, between which bars 14 extend transversely of the direction of length of the conveyor belt. As will be seen in Fig. 3, the bars are alternately located at a higher and a lower level. This can be achieved by fastening the consecutive bars at different levels to the chain 13 or the like or by fastening the ends of the bars 14 at the same level to the chain 13 and by subsequently bending the bars alternately upwards and downwards.

When the device is in use the whole shoot has a thick layer of oats chaff, buckwheat chaff or a similar material. Above a given part of the shoot laying nests are arranged for the hens to lay eggs on the layer of oats chaff, buckwheat chaff or the like in the shoot. At a given instant the endless conveyor member 2 is caused to circulate in the direction of the arrow A for a given period of time. Then the catches formed by the bars 4 will pass along the layer of material in the shoot with the eggs laid thereon by the hens. At the depressed part of the shoot formed by the inclined bottom parts 5 and 6 the material with the eggs will pass along the grid-shaped member 7 in the direction towards the conveyor belt 12. Since the egg supporting material will thus be slightly accumulated in front of the belt 12, the layer above the bottom part 5 is always sufficiently thick to ensure that the eggs supported by the oats chaff, buckwheat chaff or the like move along the bars 10 so that the eggs are prevented from rolling across these bars.

When the eggs and the material supporting them arrive at the upper run of the conveyor belt 12, the oats chaff, buckwheat chaff or the like can pass through the passages provided in the endless conveyor belt 12 and bounded by the bars 14. Said material will fall beneath the conveyor belt 12 on the endless conveyor member 2, which conveys it further in the direction of the arrow A. The bars 14 are spaced apart by a distance such that the eggs cannot pass between the bars so that the bars form catches for the eggs. The eggs will then be generally supported by two upper bars 14 of the upper run of the conveyor belt 12 and a deeper bar 14 between said upper bars so that a firm and safe support is obtained for the eggs, the eggs being thus prevented from rolling back along the upper run of the endless conveyor belt 12.

At the highest delivery end of the endless conveyor belt 12 (said end is not shown) the eggs can be supplied to further transport means and/or directly to means capable of stacking them in suitable racks or the like.

It will be obvious that by using the construction embodying the invention the transport of the eggs from the laying house to the device putting them on appropriate racks or the like can be performed fully automatically.

**Claims**

1. A device for collecting eggs comprising an elongate shoot filled with chaff or similar material in which eggs fall and along the bottom (1) of which is driven an endless conveyor member (2) towards an area where the eggs are to be conducted away, said shoot having in this area a depressed part (5, 6) still followed by the endless conveyor member (2) with a grid-shaped member (7) arranged above the part of the conveyor member lying on the section (5) of the depressed part, which moves obliquely downwards viewed in the direction of displacement of the conveyor member, characterised in that the upper face (10) of the grid-shaped member (1) is downwardly inclined in the same direction as the subjacent part of the conveyor member but at a smaller angle to the horizontal, whilst the downstream end of the upper face of grid-shaped member is disposed opposite the ascending part of a conveyor belt (12) having catches for eggs and being provided with passages through which the chaff can pass.

2. A device as claimed in claim 1, characterised in that the upstream end of the grid-shaped member (7) is formed by a strip (8) extending transversely of the direction of length of the shoot and being at an angle differing from 90° to the direction of length of the shoot.

3. A device as claimed in claim 1 or 2, characterised in that the grid-shaped member (1) comprises a plurality of bars (9) extending at least substantially in the direction of length of the conveyor member (2) and parallel to the conveyor member (2) and a plurality of further bars (10) also extending at least substantially in the direction of length of the conveyor member (2), but being at a smaller angle to the horizontal than the part of said conveyor member moving obliquely downwards, viewed in the direction of displacement of the conveyor member.

4. A device as claimed in claim 3, characterised in that the angle between the upper bars (10) and the horizontal is equal to or smaller than 20°.

5. A device as claimed in any one of the preceding claims characterized in that the conveyor belt (12) is provided with bars (14) extending transversely of the direction of length of the conveyor belt (12), at least the medium parts of said bars (14) being alternately located at different levels.

## Revendications

1. Un dispositif pour le ramassage d'oeufs comprenant une gouttière allongée remplie de paille hachée ou de matière analogue dans laquelle des oeufs tombent et le long du fond (1) de laquelle est entraîné un organe de transport sans fin (2) vers une zone où les oeufs doivent être amenés à sortir, ladite gouttière présentant dans cette zone une partie en creux (5, 6) encore suivie par un organe de transport sans fin (2) avec un organe en forme de grille (7) disposé au-dessus de la partie de l'organe de transport situé sur la portion (5) de la partie en creux, laquelle se déplace obliquement vers le bas en considérant la direction de déplacement de l'organe de transport, caractérisé en ce que la face supérieure (10) de l'organe en forme de grille (7) est inclinée vers le bas dans la même direction que la partie sous-jacente de l'organe de transport mais à un angle inférieur par rapport à l'horizontal, alors que l'extrémité aval de cette face supérieure de l'organe en forme de grille est disposée à l'opposé de la partie ascendante de la courroie de transport (12) présentant des éléments de retenue pour les oeufs et étant munis de passage à travers lesquels peut passer la paille hachée.

2. Un dispositif selon la revendication 1, caractérisé en ce que l'extrémité amont de l'organe en forme de grille (7) est formée par une bande (8) s'étendant transversalement à la direction longitudinale de la gouttière et étant à un angle différent de 90° par rapport à la direction longitudinale de la gouttière.

3. Un dispositif selon la revendication 1 ou 2, caractérisé en ce que l'organe en forme de grille (7) comprend un ensemble de barreaux (9) s'étendant au moins sensiblement dans la direction longitudinale de l'organe de transport (2) et parallèlement à l'organe de transport (2) ainsi que plusieurs barreaux supplémentaires (10) s'étendant également au moins sensiblement dans la direction longitudinale de l'organe de transport (2), mais étant à un angle plus petit par rapport à l'horizontal que la partie de l'organe de transport se déplaçant obliquement vers le bas, considéré dans la direction de déplacement de l'organe de transport.

4. Un dispositif selon la revendication 3, caractérisé en ce que l'angle entre les barreaux supérieurs (10) et l'horizontal est égal ou inférieur à 20°.

5. Un dispositif selon l'une quelconque des revendications précédentes, caractérisé en ce que la courroie de transport (12) présente des barreaux (14) s'étendànt transversalement à la direction longitudinale de la courroie de transport (12) au moins les parties médianes desdits barreaux (14) étant placées alternativement à des niveaux différents.

## Patentansprüche

1. Eine Vorrichtung zum Sammeln von Eiern mit einer längsgestreckten mit Häcksel oder einem ähnlichen Material gefüllten Transportbahn, in die Eier hineinfallen und entlang deren Boden (1) eine endlose Fördereinrichtung (2) auf einen Bereich zu bewegt wird, in dem die Eier abgeleitet werden, wobei die Transportbahn in diesem Bereich einen abgeflachten Abschnitt (5, 6), dem die endlose Fördereinrichtung (2) immer noch folgt, mit einer gitterförmigen Einrichtung (7) aufweist, die über dem Abschnitt der Fördereinrichtung angeordnet ist, der in dem Teil (5) des abgeflachten Abschnitts liegt, der schräg nach unten in Bewegungsrichtung der Fördereinrichtung gesehen verläuft, dadurch gekennzeichnet, daß die Oberseite (10) der gitterförmigen Einrichtung (7) in der gleichen Richtung wie der darunter benachbarte Abschnitt der Fördereinrichtung aber mit einem kleinerem Winkel gegen die Horizontale nach unten geneigt ist, während das abwärtsgerichtete Ende der Oberseite der gitterförmigen Einrichtung dem aufsteigenden Abschnitt eines Förderbands (12), das Mitnehmer für Eier aufweist und mit Durchgängen, durch die der Häcksel hindurchtreten kann, ausgebildet ist, gegenüber liegt.

2. Eine Vorrichtung nach Anspruch 1, dadurch gekennzeichnet, daß das aufwärtsgerichtete Ende der gitterförmigen Einrichtung (7) durch einen Streifen (8) ausgebildet ist, der sich quer zur Längsrichtung der Transportbahn erstreckt und in einem von 90° verschiedenen Winkel zur Längsrichtung der Transportbahn angeordnet ist.

3. Eine Vorrichtung nach Anspruch 1 oder 2, dadurch gekennzeichnet, daß die gitterförmige Einrichtung (7) mehrere Stäbe (9), die sich mindestens im wesentlichen in Längsrichtung des Fördereinrichtung (2) und parallel zu der Fördereinrichtung (2) erstrecken, und mehrere weitere Stäbe (10) aufweist, die sich ebenfalls mindestens im wesentlichen in Längsrichtung der Fördereinrichtung (2) erstrecken, aber, in Bewegungsrichtung der Fördereinrichtung gesehen in einem kleineren Winkel zur Horizontalen als der Abschnitt der sich schräg nach unten bewegenden Fördereinrichtung angeordnet ist.

4. Vorrichtung nach Anspruch 3, dadurch gekennzeichnet, daß der Winkel zwischen den oberen Stäben (10) und der Horizontalen gleich oder kleiner als 20° ist.

5. Vorrichtung nach einem der vorhergehenden Ansprüche, dadurch gekennzeichnet, daß das Förderband (12) mit Stäben (14) ausgerüstet ist, die sich quer zur Längsrichtung des Förderbands (12) erstrecken, wobei mindestens die mittleren Abschnitte der Stäbe (14) abwechselnd in verschiedenen Höhen angeordnet sind.

FIG.1.

FIG.2.

FIG. 3.